# FASCICULE DE BREVET EUROPEEN

(11) **EP 1 666 309 B1**
(45) Date de publication et mention de la délivrance du brevet: **18.04.2007**
(21) Numéro de dépôt: 05300973.4
(22) Date de dépôt: 30.11.2005
(51) Int. Cl.: B60R 13/04, F16B 5/12

(54) **Clip pour fixation d'un enjoliveur de pavillon d'un véhicule, ensembles formés par de tels clips et un enjoliveur de pavillon, et véhicule les comportant**
Clip zur Befestigung einer Dachverkleidung eines Fahrzeuges, Einheiten aus solchen Clips und einer Dachverkleidung sowie damit ausgestattetes Fahrzeug
Fastening clip for vehicle liner, combination of clip and liner and vehicle having same

(30) Priorité: 01.12.2004 FR 0412762
(43) Date de publication de la demande: 07.06.2006
(73) Titulaire: Peugeot Citroen Automobiles, 78140 Velizy-Villacoublay (FR)
(72) Inventeur: Goulet, Frédéric, 25700, Valentigney (FR)

(56) Documents cités:
- DE-C1- 3 230 317
- PATENT ABSTRACTS OF JAPAN vol. 2002, no. 04, 4 août 2002 (2002-08-04) -& JP 2001 341586 A (TOGO SEISAKUSHO CORP), 11 décembre 2001 (2001-12-11)
- PATENT ABSTRACTS OF JAPAN vol. 2000, no. 08, 6 octobre 2000 (2000-10-06) -& JP 2000 142264 A (HASHIMOTO FORMING IND CO LTD; NISSAN MOTOR CO LTD), 23 mai 2000 (2000-05-23)

## Description

L'invention concerne le domaine de l'industrie automobile. Plus précisément, elle concerne les « enjoliveurs de pavillon » qui équipent en particulier les véhicules possédant un toit panoramique transparent.

Un clip en forme de "U" ayant deux côtés pourvus avec des pattes est connu de JP 2001-341586.

Les toits panoramiques transparents qui équipent certaines automobiles sont habituellement montés à l'intérieur d'un cadre pour former un pavillon, qui est assemblé sur la carrosserie du véhicule en lui étant fixé, par exemple, par collage. A cet effet, la partie supérieure de la carrosserie comporte un logement pourvu de rebords sur lesquels le cadre du pavillon doit reposer.

Les tolérances de fabrication imposent généralement la présence d'un écart relativement important entre les bords du cadre et son logement. Il peut être comblé, pour des raisons esthétiques, au moyen d'un enjoliveur de pavillon réalisé généralement en matière plastique.

Ces enjoliveurs de pavillon se présentent sous la forme de pièces allongées profilées, ouvertes sur leur face inférieure, et conformées de manière à pouvoir maintenir, sur ladite face inférieure, des clips de fixation munis de pattes. Lors de la pose de l'enjoliveur, les pattes des clips viennent s'insérer dans des trous ménagés à cet effet dans le cadre du pavillon. Cette configuration impose des contraintes sur l'épaisseur du cadre du pavillon, qui doit être faible au moins dans les zones d'accrochage des clips. De plus, la perforation du cadre est une étape de la fabrication du véhicule qu'il serait souhaitable d'éliminer pour réduire les coûts.

Le but de l'invention est de proposer une solution aux problèmes techniques et économiques posés par le montage des enjoliveurs de pavillon.

A cet effet, l'invention a pour objet un clip pour fixation d'un enjoliveur de pavillon d'un véhicule automobile sur un support solidaire d'un bord d'un pavillon, caractérisé en ce qu'il comporte :
- un cadre ayant deux premiers côtés et deux deuxièmes côtés ;
- au moins une languette déformable, connectée sur l'un des premiers côtés du cadre et dirigée selon une première direction oblique vers l'intérieur du clip ;
- au moins une patte déformable, connectée sur l'un des deuxièmes côtés du cadre, portant, à son extrémité un plot comportant une portée oblique tournée vers une deuxième direction sensiblement opposée à ladite première direction ; et
- au moins une languette déformable, s'étendant obliquement et sensiblement horizontalement selon une troisième direction vers l'extérieur du clip, à partir du premier côté du cadre destiné à être disposé face à la carrosserie du véhicule ou à partir d'une patte.

Il peut comporter également des ergots sur lesdits grands côtés du cadre.

L'invention a également pour objet un ensemble formé par une pluralité de clips du type précédent et un enjoliveur de pavillon constitué par une pièce allongée profilée dont la face inférieure définit un logement dans lequel lesdits clips sont insérés préalablement au montage de l'enjoliveur de pavillon sur le véhicule.

Lesdits clips peuvent être du type comportant des ergots et ledit enjoliveur de pavillon peut comporter des logements pour lesdits ergots desdits clips.

L'invention a également pour objet un ensemble formé de deux ensembles du type précédent et d'un pavillon dont deux bords extérieurs opposés sont pourvus de supports destinés à recevoir les clips insérés dans les enjoliveurs de pavillon, lesdits supports comprenant chacun, une partie d'appui destinée à coopérer avec les languettes des premiers côtés des clips et les plots lorsque l'enjoliveur de pavillon est monté.

La partie d'appui peut comporter une portion sensiblement parallèle au plan du pavillon.

La partie d'appui peut être prise en sandwich entre l'au moins une languette et l'au moins un plot.

Ledit pavillon peut être formé par une plaque transparente enserrée dans un cadre, sur deux bords extérieurs opposés duquel sont ménagés lesdits supports.

L'invention a également pour objet un véhicule automobile du type comportant un pavillon, au moins un enjoliveur de pavillon et des clips de fixation dudit enjoliveur sur ledit pavillon, caractérisé en ce que ledit enjoliveur et lesdits clips forment un ensemble du type précédent.

L'au moins une languette déformable peut prendre appui sur un pan de la carrosserie du véhicule.

Comme on l'aura compris, l'invention repose sur de nouvelles conceptions, d'une part des clips de fixation de l'enjoliveur, et d'autre part des parties du pavillon sur lesquels les clips viennent en prise lors du montage des enjoliveurs. La conception des enjoliveurs eux-mêmes n'en est pas nécessairement affectée.

Les clips viennent en prise par simple enfoncement vertical chacun sur un support profilé en S fixé ou intégré au bord du pavillon. Le maintien du clip sur le support est assuré par un ensemble de languettes flexibles mises sous contrainte après l'insertion du clip sur le support.

L'invention sera mieux comprise à la lecture de la description qui suit, donnée en référence aux figures annexées suivantes :
- la figure 1 qui montre en vue de dessus un exemple de carrosserie d'un véhicule avant le montage d'un pavillon ;
- la figure 2 qui montre de la même façon le véhicule après montage du pavillon, mais avant la pose des enjoliveurs de pavillon ;
- la figure 3 qui montre en perspective un détail du cadre du pavillon, mettant en évidence la forme des supports des clips de fixation de l'enjoliveur selon l'invention ;
- la figure 4 qui montre en perspective un clip de fixation selon l'invention monté sur son support, l'enjoliveur dans lequel le clip est inséré n'étant pas représenté ;
- la figure 5 qui montre en coupe selon V-V l'enjoliveur de pavillon, un de ses clips de fixation, le cadre du pavillon et la carrosserie du véhicule.

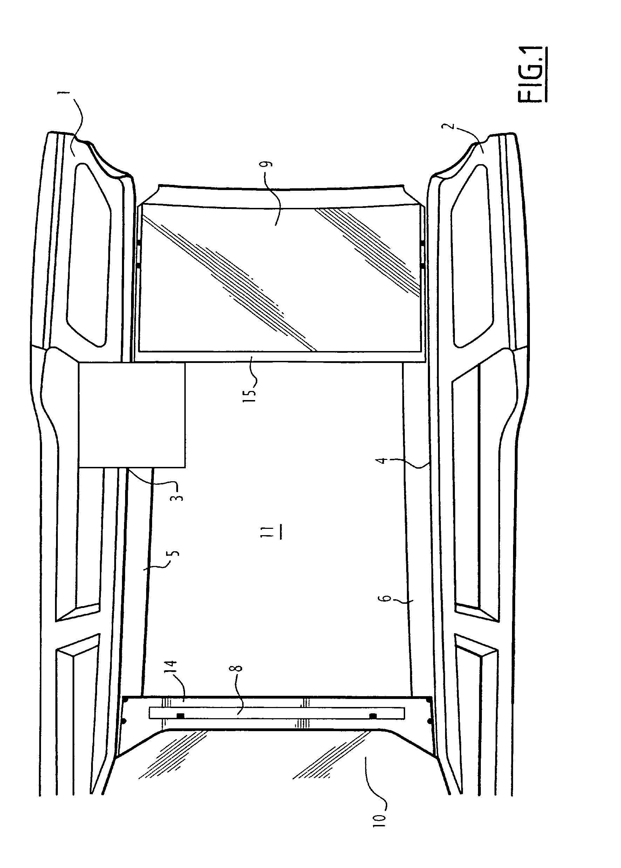

Le véhicule représenté sur la figure 1 avant montage du pavillon comporte des éléments latéraux de carrosserie 1, 2 définissant l'habitacle du véhicule. Aux sommets 3, 4 des éléments latéraux 1, 2 sont ménagés des rebords 5, 6 situés à une altitude inférieure à celle des sommets 3, 4 et tournés vers l'intérieur du véhicule. Les sommets 3, 4 et les rebords 5, 6 définissent un logement pour le placement du pavillon 7, en conjonction avec deux éléments en tôle 8, 9 qui relient l'un à l'autre les éléments latéraux 1, 2, respectivement à l'avant et à l'arrière du véhicule. Le pare-brise 10 repose sur l'élément avant 8 et les deux éléments latéraux 1, 2. Entre ces éléments 1, 2, 8, 9 est défini un espace vide 11 que le pavillon 7 doit remplir après sa pose.

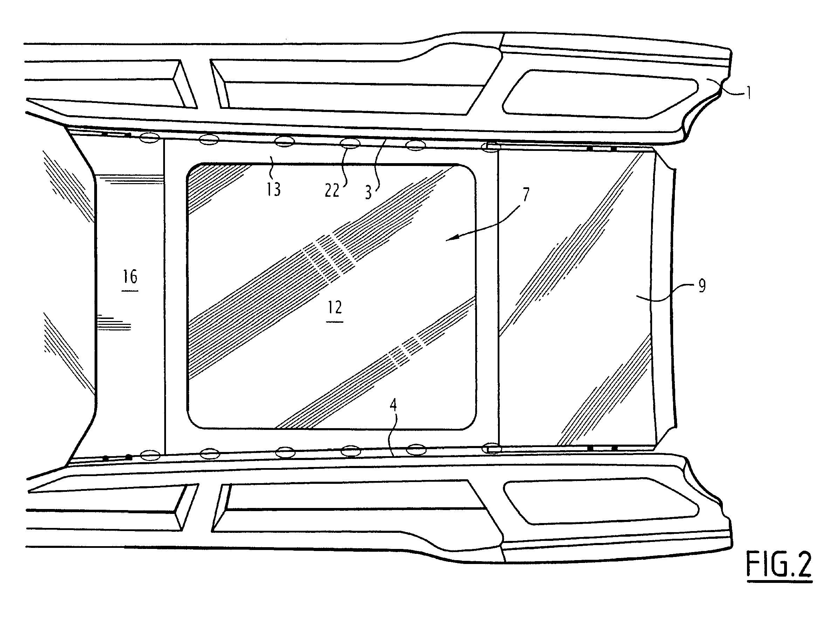

La figure 2 montre le véhicule après la pose du pavillon 7. Celui-ci, dans l'exemple représenté, se compose d'une plaque transparente 12 en verre ou en polymère et d'un cadre 13 en tôle, en matière plastique ou autre, dans lequel la plaque transparente 12 est enserrée par encapsulage et/ou collage. Le pavillon 7 couvre l'ensemble de l'espace vide 11 en reposant sur les rebords 5, 6 des éléments latéraux 1, 2 de la carrosserie et sur des rebords 14, 15 similaires ménagés respectivement sur les éléments en tôle avant et arrière 8, 9. Un enjoliveur 16 en forme de plaque recouvre l'élément en tôle avant 8 et une partie du cadre 13 du pavillon 7, dans l'exemple représenté. Outre une amélioration de l'esthétique du véhicule, cet enjoliveur 16 permet de recouvrir l'intervalle séparant l'élément en tôle 8 et le cadre 13 du pavillon 7. Tous les éléments que l'on vient de citer font partie de l'art antérieur connu.

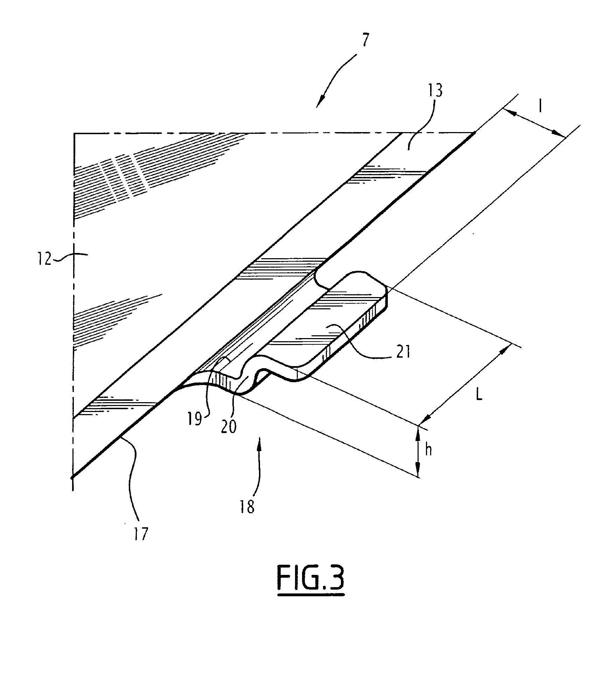

Selon l'invention, comme on le voit sur la figure 3, les deux bords extérieurs 17 opposés du cadre 13 du pavillon 7 qui sont destinés à reposer sur les rebords 5, 6 des éléments latéraux de carrosserie 1, 2 comportent, répartis sur leur longueur, des supports 18 à section transversale sensiblement en S. Ces supports 18 comprennent, à partir du bord 17 du cadre 13, une première partie sensiblement horizontale 19, une partie sensiblement verticale 20, dirigée vers le haut, et une seconde partie sensiblement horizontale 21, dite « partie d'appui », dirigée vers l'extérieur du pavillon 7. Ces supports 18 ont, par exemple, une longueur L de l'ordre de 20 à 25mm, une largeur I de l'ordre de 10mm et une hauteur h de l'ordre de 10mm. Dans l'exemple représenté, ils sont venus de matière avec le cadre 13, mais on pourrait envisager qu'ils constituent des pièces rapportées sur le cadre 13. Sur la figure 2, on a entouré les zones 22 dans lesquelles, par exemple, on peut placer les supports 18. On notera que dans l'exemple représenté, des supports peuvent être placés face à la partie du cadre 13 qui est couverte par l'enjoliveur 16.

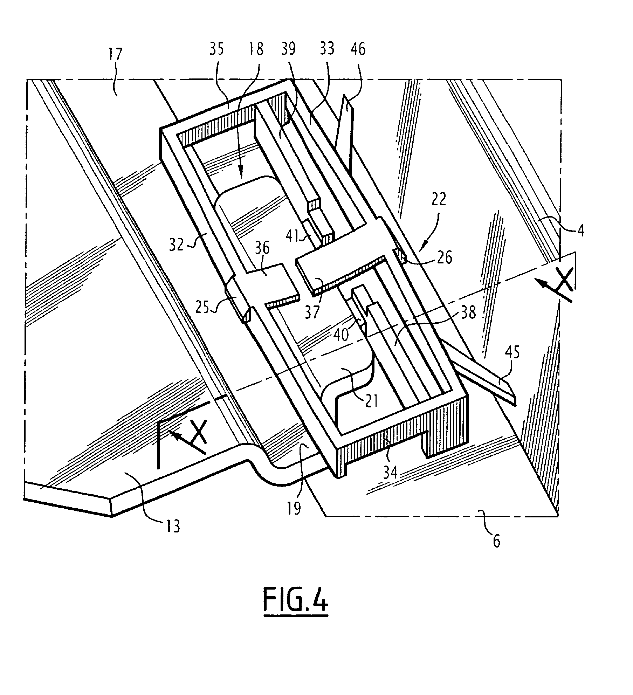

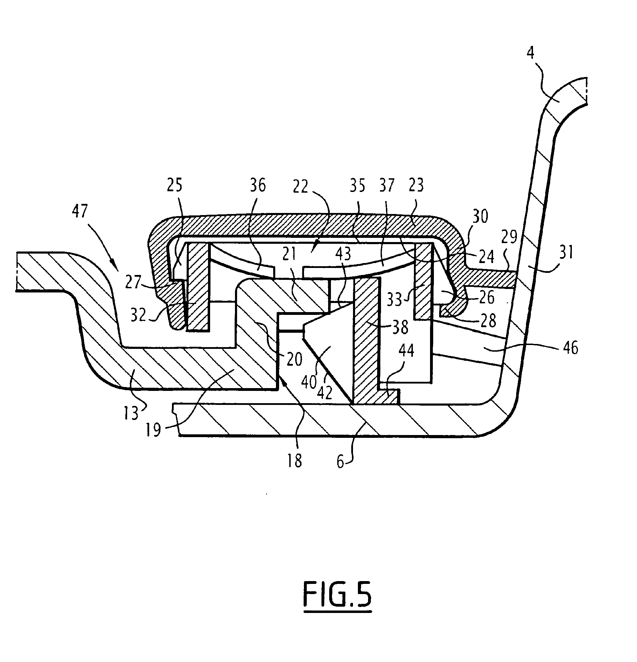

Les figures 4 et 5 montrent un des clips 22 selon l'invention, à l'état monté sur le support 18, et de plus, pour la figure 5, inséré dans l'enjoliveur de pavillon 23 qu'il contribue à fixer sur le véhicule. Ce clip peut être réalisé notamment en matière plastique ou en métal.

L'enjoliveur de pavillon 23 est en lui-même d'un type classique dans sa conception d'ensemble. Il consiste en une pièce allongée profilée, dont la face inférieure 24 définit un logement dans lequel les clips 22 sont insérés préalablement au montage de l'enjoliveur de pavillon 23 sur le véhicule. A cet effet, chaque clip 22 possède une paire d'ergots 25, 26 de section triangulaire dont les faces inférieures peuvent coulisser sur des parties repliées 27, 28 de la face inférieure 24 de l'enjoliveur de pavillon 23. Lors de leur insertion, les clips 22 sont placés à des endroits qui leur permettront, lorsque l'enjoliveur de pavillon 23 sera mis en place par simple enfoncement vertical, de venir chacun en correspondance avec un support 18. Des moyens non représentés peuvent assister le positionnement et le maintien des clips 22 aux endroits adéquats, par exemple des logements pour les ergots 25, 26. Pour le maintien des clips 22 en position, le monteur peut également appliquer localement une déformation à l'enjoliveur de pavillon 23 autour des ergots 25, 26 dans des zones qui, de préférence, ne seront plus visibles une fois que l'enjoliveur 23 sera monté.

Une patte horizontale 29 est connectée à une face latérale 30 de l'enjoliveur de pavillon 23, et est destinée à venir au contact du pan 31 de la carrosserie du véhicule qui relie le sommet 4 et le rebord 6 de l'élément latéral 2 correspondant.

Chaque clip 22 comporte un cadre, de forme générale rectangulaire dans l'exemple représenté, ayant deux premiers côtés 32, 33 (les grands côtés du cadre dans l'exemple représenté) s'étendant selon la direction longitudinale de l'enjoliveur de pavillon 23, qui portent chacun un des ergots 25, 26 déjà cités, et deux deuxièmes côtés 34, 35 (les petits côtés du cadre dans l'exemple représenté) s'étendant selon la direction transversale de l'enjoliveur de pavillon 23. Deux languettes 36, 37 sont chacune connectées sur un des premiers côtés 32, 33 et dirigées selon une première direction oblique, descendante dans l'exemple représenté, vers l'intérieur du clip 22. Ces languettes 36, 37 doivent posséder une certaine souplesse au niveau de leur articulation sur le cadre du clip 22 et être aptes à se déformer selon la verticale. Lorsque le clip 22 est inséré sur le support 18, elles prennent appui sur la partie d'appui 21 du support 18. On crée ainsi une contrainte lorsque l'enjoliveur de pavillon 23 est monté.

Chaque deuxième côté 34, 35 du clip 22 comporte une patte 38, 39 déformable s'étendant sensiblement parallèlement aux grands côtés 32, 33 et vers l'intérieur du clip 22. Chaque patte 38, 39 porte à son extrémité un plot 40, 41. Chaque plot 40, 41 est de section sensiblement triangulaire et comporte une portée oblique tournée vers les bas 42, une portée oblique 43, tournée vers une deuxième direction sensiblement opposée à ladite première direction, donc tournée vers le haut dans l'exemple représenté, et une portée inférieure horizontale 44. Lors du montage de l'enjoliveur de pavillon 23 par enfoncement des clips 22 sur les supports 18, les portées obliques tournées vers le bas 42 des plots 40, 41 viennent au contact des parties d'appui 21 des supports 18. Au cours de la descente du clip 22, ce contact provoque la déformation des pattes 38, 39. Les plots 40, 41 finissent par passer sous le support 18 et leurs portées inférieures 44 viennent reposer sur le rebord 6 de l'élément latéral de carrosserie 2. Les pattes 38, 39 tendent à revenir à leur position normale, ce qui provoque la mise en contact des portées obliques tournées vers le haut 43 des plots 40, 41 avec les parties d'appui 21 des supports 18. Cela rend le dégagement du clip 22 d'autant plus difficile que l'angle que forment les portes obliques tournées vers le haut 43 avec l'horizontale est plus faible. Similairement, l'enfoncement du clip 22 sur le support 18 est d'autant plus aisé que l'angle que fournissent les portées obliques tournées vers le bas 42 avec la verticale est plus faible.

Le premier côté 33 qui est destiné à être disposé face à la carrosserie du véhicule porte deux languettes 45, 46 qui s'étendent obliquement et sensiblement horizontalement selon une troisième direction vers l'extérieur du clip 22, donc en direction du pan 31 de la carrosserie du véhicule. Ces languettes 45, 46 doivent présenter une certaine souplesse au niveau de leur articulation sur la patte 38, 39 et une capacité de déformation dans la direction transversale de l'enjoliveur de pavillon 23. Les languettes 45, 46 ont des dimensions telles qu'après le montage de l'enjoliveur de pavillon 23, elles s'appuient contre le pan 31. Elles garantissent un placage des plots 40, 41 qui les portent contre le support 18 du clip 22. En variante, elles pourraient être portées par les pattes 38, 39.

On remarque également que les bords inférieurs des côtés 32, 33, 34, 35 des clips 22 ne sont pas au contact du rebord 6 de la carrosserie du véhicule ou du support 18 solidaire du cadre 13 du pavillon. Sans être strictement indispensable, cela est très conseillé pour la prise en compte des tolérances de fabrication habituelles des différentes pièces. Dans ces conditions, seuls les plots 40, 41 et les languettes 36, 37 connectées sur les grands côtés 32, 33 du clip 22 assurent un contact entre le clip 22 et la seconde partie horizontale d'appui 21 du support 18.

On remarque enfin l'existence d'un espace 47 entre l'enjoliveur de pavillon 23 et le cadre 13, aussi bien latéralement que verticalement. Cet espace est, là encore, conseillé pour tenir compte des tolérances de fabrication. L'écart latéral relativement important tel que représenté permet de gérer ces tolérances de fabrication d'une manière esthétique.

L'invention permet de réaliser un excellent centrage de l'enjoliveur de pavillon 23 entre le cadre 13 du pavillon et la carrosserie du véhicule, de même qu'un montage facile et un bon maintien en place de l'enjoliveur de pavillon 23 du fait des diverses contraintes qui s'exercent entre les supports 18, les diverses parties souples des clips 22 et les pans 31 de la carrosserie. Ces résultats sont obtenus de façon particulièrement économiques, en ce que les pièces mises en jeu sont de conception simple et ne nécessitent aucun perçage du cadre 13 du pavillon ou de tout autre pièce.

Bien entendu, des variantes peuvent être apportées à l'invention telle qu'elle vient d'être décrite. Par exemple, il n'est pas forcément indispensable de prévoir les ergots 25, 26 sur le clip 22, en particulier si d'autres moyens fonctionnellement équivalents de détermination et de maintien de la position du clip 22 à l'intérieur de l'enjoliveur de pavillon 23 sont prévus sur l'un et/ou l'autre de ces éléments. Il pourrait aussi être suffisant de ne prévoir qu'un seul élément déformable de chaque espèce par clip 22. De même, l'invention ne s'applique pas exclusivement au cas où le pavillon 7 est constitué d'une plaque transparente 12 enserrée dans un cadre 13 : il pourrait être constitué simplement d'une plaque opaque conférant au toit du véhicule un apparence habituelle.

## Revendications

1. Clip (22) pour fixation d'un enjoliveur de pavillon (23) d'un véhicule automobile sur un support (18) solidaire d'un bord (17) d'un pavillon (7), **caractérisé en ce qu**'il comporte :
- un cadre ayant deux premiers côtés (32, 33) et deux deuxièmes côtés (34, 35) ;
- au moins une languette (36, 37) déformable, connectée sur l'un des premiers côtés (32, 33) du cadre et dirigée selon une première direction oblique vers l'intérieur du clip (22) ;
- au moins une patte (38, 39) déformable, connectée sur l'un des deuxièmes côtés (34, 35) du cadre, portant, à son extrémité un plot (40, 41) comportant une portée oblique (43) tournée vers une deuxième direction sensiblement opposée à ladite première direction ; et
- au moins une languette (45, 46) déformable, s'étendant obliquement et sensiblement horizontalement selon une troisième direction vers l'extérieur du clip (22), à partir du premier côté (33) du cadre destiné à être disposé face à la carrosserie du véhicule ou à partir d'une patte (38, 39).

2. Clip (22) selon la revendication 1, **caractérisé en ce qu**'il comporte également des ergots (25, 26) sur lesdits grands côtés (32, 33) du cadre.

3. Ensemble formé par une pluralité de clips (22) selon la revendication 1 ou 2 et un enjoliveur de pavillon (23) constitué par une pièce allongée profilée dont la face inférieure (24) définit un logement dans lequel lesdits clips (22) sont insérés préalablement au montage de l'enjoliveur de pavillon (23) sur le véhicule.

4. Ensemble selon la revendication 3, **caractérisé en ce que** lesdits clips (22) sont du type selon la revendication 2 et **en ce que** ledit enjoliveur de pavillon (23) comporte des logements pour les ergots (25, 26) desdits clips (22).

5. Ensemble formé par deux ensembles selon la revendication 3 ou 4 et un pavillon (7) dont deux bords extérieurs opposés (17) sont pourvus de supports (18) destinés à recevoir les clips (22) insérés dans les enjoliveurs de pavillon (23), lesdits supports comprenant chacun, une partie d'appui (21) destinée à coopérer avec les languettes (36, 37) des premiers côtés (32, 33) des clips (22) et les plots (40, 41) lorsque l'enjoliveur de pavillon (23) est monté.

6. Ensemble selon la revendication 5, **caractérisé en ce que** la partie d'appui (21) comporte une portion sensiblement parallèle au plan du pavillon (7).

7. Ensemble selon la revendication 5 ou 6, **caractérisé en ce que** la partie d'appui (21) est prise en sandwich entre l'au moins une languette (36, 37) et l'au moins un plot (40, 41).

8. Ensemble selon l'une des revendications 5 à 7, **caractérisé en ce que** ledit pavillon (7) est formé par une plaque transparente (12) enserrée dans un cadre (13), sur deux bords extérieurs (17) opposés duquel sont ménagés lesdits supports (18).

9. Véhicule automobile du type comportant un pavillon (7), au moins un enjoliveur de pavillon (23) et des clips (22) de fixation dudit enjoliveur sur ledit pavillon, **caractérisé en ce que** ledit enjoliveur (23) et lesdits clips (22) forment un ensemble selon l'une des revendications 5 à 8.

10. Véhicule selon la revendication 9, **caractérisé en ce que** l'au moins une languette (45,46) déformable prend appui sur un pan (31) de la carrosserie du véhicule.

## Claims

1. Clip (22) for fixing a roof trim (23) of a motor vehicle to a support (18) integral with one edge (17) of a roof (7), **characterised in that** it comprises:
- a framework having two first sides (32, 33) and two second sides (34, 35);
- at least one deformable tab (36, 37), connected to one on the first sides (32, 33) of the framework and pointing in a first oblique direction towards the inside of the clip (22);
- at least one deformable leg (38, 39), connected to one of the second sides (34, 35) of the framework, bearing at its end a stud (40, 41) comprising an oblique face (43) turned towards a second direction substantially opposite said first direction; and
- at least one deformable tab (45, 46), extending obliquely and substantially horizontally in a third direction towards the outside of the clip (22), starting from the first side (33) of the framework intended to be positioned facing the body of the vehicle or starting from a leg (38, 39).

2. Clip (22) according to Claim 1, **characterised in that** it also comprises spurs (25, 26) on said long sides (32, 33) of the framework.

3. Assembly formed by a plurality of clips (22) according to Claim 1 or 2 and a roof trim (23) constituted by a shaped elongated part, the lower face (24) of which defines a housing into which said clips (22) are inserted before the roof trim (23) is mounted on the vehicle.

4. Assembly according to Claim 3, **characterised in that** said clips (22) are of the type according to Claim 2 and **in that** said roof trim (23) comprises housings for the spurs (25, 26) of said clips (22).

5. Assembly formed by two assemblies according to Claim 3 or 4 and a roof (7), two opposite outer edges (17) of which are provided with supports (18) intended to receive the clips (22) inserted into the roof trims (23), said supports each comprising a support portion (21) intended to co-operate with the tabs (36, 37) of the first sides (32, 33) of the clips (22) and the studs (40, 41) when the roof trim (23) is mounted.

6. Assembly according to Claim 5, **characterised in that** the support portion (21) comprises a portion substantially parallel to the plane of the roof (7).

7. Assembly according to Claim 5 or 6, **characterised in that** the support portion (21) is sandwiched between the at least one tab (36, 37) and the at least one stud (40, 41).

8. Assembly according to one of Claims 5 to 7, **characterised in that** said roof (7) is formed by a transparent pane (12) enclosed within a framework (13), said supports (18) being produced on two opposite outer edges (17) of said framework.

9. Motor vehicle of the type comprising a roof (7), at least one roof trim (23) and clips (22) for fixing said trim to said roof, **characterised in that** said trim (23) and said clips (22) form an assembly according to one of Claims 5 to 8.

10. Vehicle according to Claim 9, **characterised in that** the at least one deformable tab (45, 46) bears on one face (31) of the body of the vehicle.

## Patentansprüche

1. Clip (22) zur Befestigung einer Dachverkleidung (23) eines Kraftfahrzeugs an einem mit einem Rand (17) eines Dachs (7) fest verbundenen Träger (18), **dadurch gekennzeichnet, dass** er Folgendes aufweist:
- einen Rahmen mit zwei ersten Seiten (32, 33) und zwei zweiten Seiten (34, 35);
- mindestens eine verformbare Zunge (36, 37), die mit einer der ersten Seiten (32, 33) des Rahmens verbunden ist und sich in einer ersten schrägen Richtung zum Inneren des Clips (22) erstreckt;
- mindestens einen verformbaren Lappen (38, 39), der mit einer der zweiten Seiten (34, 35) des Rahmens verbunden ist und an seinem Ende eine Steckstelle (40, 41) mit einer in einer zweiten Richtung verlaufenden schrägen Auflagefläche (43) trägt, wobei die zweite Richtung im Wesentlichen entgegengesetzt zur ersten Richtung verläuft; und
- mindestens eine verformbare Zunge (45, 46), die sich von der ersten Seite (33) des Rahmens, die gegenüber der Fahrzeugkarosserie angeordnet wird, oder von einem Lappen (38, 39) aus schräg und im Wesentlichen horizontal in einer dritten Richtung zum Äußeren des Clips (22) erstreckt.

2. Clip (22) nach Anspruch 1, **dadurch gekennzeichnet, dass** er auch Vorsprünge (25, 26) an den langen Seiten (32, 33) des Rahmens aufweist.

3. Einheit aus mehreren Clips (22) nach Anspruch 1 oder 2 und einer Dachverkleidung (23), die aus einem langgestreckten Profil besteht, dessen Unterseite (24) eine Aufnahme festlegt, in die die Clips (22) vor der Montage der Dachverkleidung (23) am Fahrzeug eingefügt werden.

4. Einheit nach Anspruch 3, **dadurch gekennzeichnet, dass** die Clips (22) von der Art nach Anspruch 2 sind und dass die Dachverkleidung (23) Aufnahmen für die Vorsprünge (25, 26) der Clips (22) aufweist.

5. Einheit aus zwei Einheiten nach Anspruch 3 oder 4 und einem Dach (7), dessen gegenüberliegende zwei Außenränder (17) mit Trägern (18) versehen sind, welche die in die Dachverkleidungen (23) eingefügten Clips (22) aufnehmen, wobei die Träger jeweils einen Auflageabschnitt (21) aufweisen, der mit den Zungen (36, 37) der ersten Seiten (32, 33) der Clips (22) und den Steckstellen (40, 41) zusammenwirkt, wenn die Dachverkleidung (23) montiert ist.

6. Einheit nach Anspruch 5, **dadurch gekennzeichnet, dass** der Auflageabschnitt (21) einen Abschnitt aufweist, der im Wesentlichen parallel zur Ebene des Dachs (7) ist.

7. Einheit nach Anspruch 5 oder 6, **dadurch gekennzeichnet, dass** der Auflageabschnitt (21) zwischen mindestens einer Zunge (36, 37) und mindestens einer Steckstelle (40, 41) liegt.

8. Einheit nach einem der Ansprüche 5 bis 7, **dadurch gekennzeichnet, dass** das Dach (7) aus einer transparenten Platte (12) gebildet ist, die in einem Rahmen (13) eingeschlossen ist, der an zwei gegenüberliegenden Außenrändern (17) die Träger (18) aufweist.

9. Kraftfahrzeug mit einem Dach (7), mindestens einer Dachverkleidung (23) und Clips (22) zur Befestigung der Verkleidung am Dach, **dadurch gekennzeichnet, dass** die Verkleidung (23) und die Clips (22) eine Einheit nach einem der Ansprüche 5 bis 8 bilden.

10. Fahrzeug nach Anspruch 9, **dadurch gekennzeichnet, dass** mindestens eine verformbare Zunge (45, 46) an einer Fläche (31) der Fahrzeugkarosserie anliegt.
